# EUROPÄISCHE PATENTSCHRIFT

(11) **EP 4 469 274 B1**
(45) Veröffentlichungstag und Bekanntmachung des Hinweises auf die Patenterteilung: **10.09.2025**
(21) Anmeldenummer: 23701737.1
(22) Anmeldetag: 25.01.2023
(51) Int. Cl.: B32B 17/00, B60J 1/00, B60Q 3/208, G02B 6/00

(54) **BELEUCHTBARE VERGLASUNG**
ILLUMINABLE GLAZING
VITRAGE POUVANT ÊTRE ÉCLAIRÉ

(30) Priorität: 28.01.2022 EP 22153882
(43) Veröffentlichungstag der Anmeldung: 04.12.2024
(73) Patentinhaber: Saint-Gobain Sekurit France, 60150 Thourotte (FR)
(72) Erfinder: DO ROSARIO, Jefferson, 52134 Herzogenrath (DE); ZEICHNER, Achim, 52134 Herzogenrath (DE); MANDELARTZ, Matthias, 52134 Herzogenrath (DE); SARKISSIAN, Pierre, 52134 Herzogenrath (DE)
(74) Vertreter: SGR Germany-Patents
(86) Internationale Anmeldenummer: PCT/EP2023/051742
(87) Internationale Veröffentlichungsnummer: WO 2023/144172

(56) Entgegenhaltungen:
- WO-A1-2007/077099
- WO-A1-2014/167291
- US-A1- 2014 240 997
- US-A1- 2014 254 187

## Beschreibung

Die Erfindung betrifft eine Verglasungsanordnung mit einer Lichtquelle und einem Lichtauskopplungsmittel.

Kraftfahrzeuge verfügen im Innenraum über eine Lichtverteilung, die je nach Bedarf für eine dezente oder auffallende Ausleuchtung des Innenraums sorgt. Die Beleuchtung sorgt nicht nur für Orientierung im Fahrzeug, sondern kreiert auch eine angenehme Atmosphäre für Insassen. Verbundscheiben als Verglasungen aus zwei oder mehreren gläsernen oder polymeren Scheiben werden in Fahrzeugen als Windschutzscheiben, Heckscheiben, Seitenscheiben und Dachscheiben eingesetzt. Bei beleuchtbaren oder beleuchteten Verglasungen wird unter Ausnutzung der Totalreflexion Licht einer Lichtquelle in einen flächigen Lichtleiter in Form einer Scheibe der Verglasung eingekoppelt.

WO 2010/049638 A1, WO 2013/053629 A1, WO 2014060409 A1 oder WO 2015/095288 A2 offenbaren die Einkopplung von Licht über eine Seitenfläche in eine Glasscheibe. Wenn die Lichtquelle sehr nah an der Glaskante platziert wird, kann auf diese Weise sehr effizient und über die gesamte Breite des Lichtleiters Licht in den Lichtleiter eingekoppelt werden. Dadurch kann eine sehr homogene flächige Beleuchtung erreicht werden. Aus der WO2013/110885 A1, WO2018178591 A1 oder WO2019/105855 A1 ist bekannt die Lichtquelle in eine Ausnehmung anzuordnen und dadurch das Licht in die Scheibe einzukoppeln.

Die Lichtreflektionen gelangen durch mehrfaches Reflektieren an den parallelen Oberflächen der Scheibe bis in den Randbereich der Scheibe, wo sie wieder aus der Scheibe austreten können. Dies erzeugt einen beleuchteten Randbereich. Dieser unerwünschte Lichteffekt im Randbereich der Scheibe ist durch einen Betrachter gut wahrnehmbar.

WO 2007/077099 A1, WO 2014/167291 A1, US 2014/240997 A1 und US 2014/254187 A1 offenbaren beleuchtete Verglasungsanordnungen, bei denen im Randbereich ein Abdeckdruck vorgesehen ist.

Die Aufgabe der vorliegenden Erfindung besteht darin, eine verbesserte Verglasungsanordnung bereitzustellen, bei der in die Scheibe eingekoppeltes Licht nicht als Streulicht im Randbereich der Scheibe wahrgenommen werden kann.

Diese Aufgabe wird gelöst durch eine Verglasungsanordnung gemäß Anspruch 1. Bevorzugte Ausführungen gehen aus den Unteransprüchen hervor.

Die erfindungsgemäße Verglasungsanordnung umfasst eine erste Scheibe mit einer ersten Oberfläche (IV) und einer zweiten Oberfläche (III). Die erste Scheibe ist dazu vorgesehen, eingekoppeltes Licht zumindest teilweise weiterzuleiten. Weiterhin umfasst die Verglasungsanordnung eine Lichtquelle zum Erzeugen von in die erste Scheibe einkoppelbarem Licht, ein Lichtauskopplungsmittel zum Auskoppeln von Licht aus der ersten Scheibe über eine der zwei Oberflächen (III, IV). Ferner ist die erste Scheibe über eine Zwischenschicht mit einer zweiten Scheibe zu einer Verbundscheibe verbunden. Die Verglasungsanordnung weist einen Randbereich auf, der sich von einer Scheibenkante der ersten Scheibe über mindestens 1 mm bis 500 mm auf einer der Oberflächen (III, IV) erstreckt und ein Absorptionsmittel zur Absorption von in der ersten Scheibe eingekoppeltem Licht, das in dem Randbereich angeordnet ist, wobei das Absorptionsmittel eine lichtundurchlässige, insbesondere undurchsichtige thermoplastische Zwischenschicht umfasst.

Da eine Lichtauskopplung an den Rändern der Verbundscheibe nicht gewünscht ist, weist der Randbereich der ersten Scheibe die lichtundurchlässige thermoplastische Zwischenschicht auf, welche das Streulicht absorbiert. Dadurch wird mit geringem Aufwand das Streulicht im Randbereich der Verbundscheibe stark reduziert. Vorzugsweise ist die lichtundurchlässige thermoplastische Zwischenschicht dunkel, schwarz oder grau gefärbt. Durch die Schwarzfärbung wird das Streulicht besonders effektiv an einem Austritt aus der Verbundscheiben im Randbereich gehindert. Die lichtundurchlässige thermoplastische Zwischenschicht kann aber auch jede andere Farbe aufweisen.

In einer besonders bevorzugten Ausführungsform umfasst die Zwischenschicht eine transparente thermoplastische Zwischenschicht und die lichtundurchlässige thermoplastische Zwischenschicht. Als "lichtundurchlässig" im Sinne der Erfindung wird ein Gegenstand, insbesondere eine Scheibe, Schicht oder Folie, verstanden, welcher eine Transmission im sichtbaren Spektralbereich von weniger als 5%, bevorzugt weniger als 2%, besonders bevorzugt 0 % aufweist.

Die transparente thermoplastische Zwischenschicht kann durch eine erste thermoplastische Verbundfolie und die lichtundurchlässige thermoplastische Zwischenschicht durch eine zweite thermoplastische Folie ausgebildet sein, wobei die erste thermoplastische Verbundfolie transparent ist und die zweite thermoplastische Folie opak ist. Die lichtundurchlässige thermoplastische Zwischenschicht kann als eine opake thermoplastische, insbesondere polymere Folie ausgebildet sein. Der Begriff "opak" bezeichnet eine mangelnde Durchsichtigkeit. Opak bedeutet im Sinne der Erfindung, dass ein Betrachter nicht durch die Zwischenschicht oder Abdeckschicht hindurchblicken kann.

Die transparente thermoplastische Zwischenschicht und die lichtundurchlässige thermoplastische Zwischenschicht enthalten vorzugsweise mindestens einen Kunststoff, bevorzugt Polyvinylbutyral (PVB), Ethylenvinylacetat (EVA) und / oder Polyethylenterephthalat (PET) oder bestehen daraus.

Die Zwischenschicht kann aber auch beispielsweise Polyurethan (PU), Polypropylen (PP), Polyacrylat, Polyethylen (PE), Polycarbonat (PC), Polymethylmetacrylat, Polyvinylchlorid, Polyacetatharz, Gießharze, Acrylate, fluorinierte Ethylen-Propylene, Polyvinylfluorid und/oder Ethylen-Tetrafluorethylen, oder Copolymere oder Gemische davon enthalten. Die Zwischenschicht kann durch eine oder auch durch mehrere übereinander angeordnete Folien ausgebildet werden, wobei die Dicke einer Folie bevorzugt von 0,025 mm bis 1 mm beträgt, typischerweise 0,38 mm oder 0,76 mm. Die Zwischenschichten können bevorzugt thermoplastisch sein und nach der Lamination die erste Scheibe, die zweite Scheibe und eventuelle weitere Zwischenschichten miteinander verkleben. Besonders vorteilhaft sind sogenannte akustik-dämpfende Zwischenschichten, die bevorzugt aus drei Lagen PVB bestehen, wobei die mittlere Lage weicher ausgebildet ist als die zwei äußeren Lagen.

Die Zwischenschicht kann auch eine funktionale Schicht aufweisen, insbesondere eine Infrarotstrahlung reflektierende Schicht, eine Infrarotstrahlung absorbierende Schicht, eine UV-Strahlung absorbierende Schicht, eine zumindest abschnittsweise gefärbte Schicht und/oder eine zumindest abschnittsweise getönte Schicht. So kann die thermoplastische Zwischenschicht beispielsweise auch ein Bandfilter sein.

Bevorzugt bestehen die lichtundurchlässige thermoplastische Zwischenschicht und die transparente thermoplastische Zwischenschicht aus Polyvinylbutyral. Hiermit werden die besten Ergebnisse erzielt und Materialunverträglichkeiten verhindert. Die transparente thermoplastische Zwischenschicht und die lichtundurchlässige thermoplastische Zwischenschicht bilden die Zwischenschicht. So erhält man eine durchgehende Zwischenschicht, was für eine gleichmäßige Scheibengeometrie vorteilhaft ist. Die erste Verbundfolie kann sich über die gesamte Fläche der Verbundscheibe mit Ausnahme des Randbereichs erstrecken. Die opake Folie erstreckt sich mindestens, vorzugsweise ausschließlich, über den Randbereich der Verbundscheibe. Ferner kann sich die lichtundurchlässige thermoplastische Zwischenschicht von der Scheibenkante bis zu einer Aussparung erstrecken, in welcher die Lichtquelle angeordnet ist. Die lichtundurchlässige thermoplastische Zwischenschicht kann sich von der Scheibenkante in Richtung Scheibenmitte der Verbundscheibe über 1 mm bis 500 mm, bevorzugt 10 mm bis 150 mm, besonders bevorzugt 10 mm bis 15 mm erstrecken.

In einer Ausführungsform umfasst das Absorptionsmittel zusätzlich eine erste Abdeckschicht, die an der ersten Oberfläche (IV) der ersten Scheibe angeordnet ist.

In einer weiteren Ausführungsform weist die zweite Scheibe eine zweite Abdeckschicht auf. Bevorzugt sind die erste Abdeckschicht und/oder die zweite Abdeckschicht opak. Weiterhin bevorzugt weisen die lichtundurchlässige thermoplastische Zwischenschicht sowie die erste und zweite Abdeckschicht die gleiche optische Dichte.

In einer besonders bevorzugten Ausführungsform weist die zweite Scheibe die zweite Abdeckschicht auf. Dadurch wird das Streulicht im Randbereich an beiden Hauptoberflächen der Verbundscheibe absorbiert. Die erste Abdeckschicht und die zweite Abdeckschicht können sich von der Scheibenkante der ersten Scheibe über 1 mm bis 500 mm, bevorzugt 10 mm bis 150 mm, besonders bevorzugt 10 mm bis 15 mm erstrecken.

In einer Ausführungsform überlappen sich die lichtundruchlässige thermoplastische Zwischenschicht, die erste Abdeckschicht und die zweite Abdeckschicht zumindest teilweise in Durchsichtrichtung der Verbundscheibe.

Vorzugsweise ist vorgesehen, dass die erste Abdeckschicht an der ersten Oberfläche der ersten Scheibe angeordnet ist. Insbesondere überlappen sich die erste Abdeckschicht und die zweite Abdeckschicht zumindest teilweise in Durchsichtrichtung der Verbundscheibe.

Die Abdeckschichten werden auch als Abdeckdruck oder Schwarzdruck bezeichnet. Der Abdeckdruck ist aus einer Druckfarbe ausgebildet. Die erste Abdeckschicht und/oder die zweite Abdeckschicht können aus einer opaken Emaille ausgebildet sein, bevorzugt aufgebracht als Siebdruck oder als Digitaldruck. Die Emaille kann Glasfritten und/oder mineralische Fritten und optional mindestens ein Pigment enthalten, bevorzugt Glasfritten und/oder mineralische Fritten auf Basis von Oxiden ausgewählt aus Bor, Wismut, Zink, Silizium, Aluminium und Natrium. Das Pigment sorgt für die Opazität der Abdeckschicht. Das Pigment kann ein Schwarzpigment, beispielsweise Pigmenttruß (Carbon Black), Anilinschwarz, Beinschwarz, Eisenoxidschwarz, Spinellschwarz und/oder Graphit aufweisen. Alternativ können die erste und/oder zweite Abdeckschicht als ein insbesondere schwarzes Klebeband oder ein Grundschicht, sogenannter Primer, ausgebildet sein. Der Primer kann eine Sol-Gel-Schicht aus Siliziumoxid in Mischung mit anderen anorganischen Oxiden umfassen.

Alternativ oder zusätzlich kann das Absorptionsmittel eine weitere Abdeckschicht umfassen, die an der Zwischenschicht, insbesondere an der lichtundurchlässigen thermoplastischen Zwischenschicht, angeordnet ist.

In einer weiteren Ausführungsform umfasst die Verbundscheibe eine umlaufende Scheibenkante, wobei das Absorptionsmittel zumindest abschnittsweise entlang der umlaufenden Scheibenkante angeordnet ist oder das Absorptionsmittel sich umlaufend entlang der gesamten umlaufenden Scheibenkante erstreckt. Die Verbundscheibe weist einen Durchsichtbereich auf, in dem die Verbundscheibe keine Abdeckschicht aufweist. Der Durchsichtbereich der Verbundscheibe macht mindestens 30%, bevorzugt 50% der Fläche der Verbundscheibe aus. Ist die Verbundscheibe als eine Dachscheibe oder Windschutzscheibe ausgebildet, kann der Durchsichtbereich mindestens 70% oder mindestens 80 % der Fläche der Verbundscheibe ausmachen.

In einer weiteren Ausführungsform umfasst die Lichtquelle mindestens eine oder mehrere Leuchtdioden (LED). Diese Art von Lichtquellen sind besonders hell und effektiv. Die erste Scheibe weist mindestens eine Aussparung zu Aufnahme der Lichtquelle auf. Dadurch kann eine Verringerung des in die Umgebung außerhalb der Verbundscheibe gestreuten Lichtes und eine verbesserte Lichteinkopplung in die erste Scheibe erzielt werden. Alternativ kann die Lichtquelle außerhalb der Verbundscheibe an einer Seitenfläche oder der ersten Oberflächen (IV) der ersten Scheibe angeordnet sein, sodass die Einkopplung von Licht über eine äußere Seitenfläche oder der ersten Oberfläche (IV) in die erste Scheibe stattfindet.

Als erste Scheibe und zweite Scheibe sind im Grunde alle elektrisch isolierenden Substrate geeignet, die unter den Bedingungen der Herstellung und der Verwendung der Verbundscheibe thermisch und chemisch stabil sowie dimensions-stabil sind.

Die erste Scheibe und die zweite Scheibe enthalten bevorzugt Glas, besonders bevorzugt Floatglas aus klarem Glas, ganz besonders bevorzugt Diamantglas. Alternativ können die Scheiben auch Flachglas, wie Kalk-Natron-Glas, Borosilikatglas oder Quarzglas, oder klare Kunststoffe, starre klare Kunststoffe, insbesondere Polyethylen, Polypropylen, Polycarbonat, Polymethylmethacrylat, Polystyrol, Polyamid, Polyester, Polyvinylchlorid und/oder Gemische davon, enthalten. Die erste Scheibe und/oder zweite Scheibe sind bevorzugt transparent, insbesondere für die Verwendung der Scheiben als Dachscheibe, Windschutzscheibe oder Rückscheibe eines Fahrzeugs oder anderen Verwendungen, bei denen eine hohe Lichttransmission erwünscht ist. Insbesondere besteht zumindest die erste Scheibe und bevorzugt auch die zweite Scheibe aus Klarglas.

Eine Beschichtung, insbesondere eine Scheibe oder ein Gegenstand wird als transparent verstanden, wenn die Beschichtung, die Scheibe oder der Gegenstand eine Transmission im sichtbaren Spektralbereich von größer 20%, bevorzugt 50%, besonders bevorzugt von größer 70 %, insbesondere von größer 85% aufweist.

Für Scheiben, die nicht im verkehrsrelevanten Sichtfeld des Fahrers liegen, beispielsweise für Dachscheiben, kann die Transmission aber auch viel geringer sein, beispielsweise größer als 5 %. Transparent bedeutet im Sinne der Erfindung, dass ein Betrachter durch die Scheibe oder Zwischenschicht hindurchblicken kann und Objekte, die sich vom Betrachter aus gesehen hinter der Scheibe oder Zwischenschicht befinden, erkennen kann. Dazu kann beispielsweise die zweite Scheibe und/oder die Zwischenschicht getönt oder gefärbt sein.

Die Dicke von erster Scheibe und/oder zweiter Scheibe kann breit variieren und so hervorragend den Erfordernissen des Einzelfalls angepasst werden. Vorzugsweise werden Standardstärken von 1,0 mm bis 25 mm, bevorzugt von 1,4 mm bis 2,5 mm für Fahrzeugglas und bevorzugt von 4 mm bis 25 mm für Möbel, Geräte und Gebäude, verwendet. Die Größe der Scheiben kann breit variieren und richtet sich nach der Größe der erfindungsgemäßen Verwendung. Die erste Scheibe und zweite Scheibe weisen beispielsweise im Fahrzeugbau und Architekturbereich übliche Flächen von 200 cm² bis zu 20 m² auf.

Die Verbundscheibe kann eine beliebige dreidimensionale Form aufweisen. Vorzugsweise hat die dreidimensionale Form keine Schattenzonen, so dass sie beispielsweise durch Kathodenzerstäubung mit weiteren Beschichtungen beschichtet werden kann. Bevorzugt sind die Scheiben planar oder leicht oder stark in einer Richtung oder in mehreren Richtungen des Raumes gebogen. Insbesondere werden planare Substrate verwendet. Die Scheiben können farblos oder gefärbt sein.

Die Begriffe "erste Scheibe" und "zweite Scheibe" sind zur Unterscheidung der beiden Scheiben bei einer erfindungsgemäßen Verbundscheibe gewählt. Mit den Begriffen ist keine Aussage über die geometrische Anordnung verbunden. Ist die erfindungsgemäße Verbundscheibe beispielsweise dafür vorgesehen, in einer Öffnung, beispielsweise eines Fahrzeugs oder eines Gebäudes, den Innenraum gegenüber der äußeren Umgebung abzutrennen, so kann die erste Scheibe dem Innenraum oder der äußeren Umgebung zugewandt sein.

In einer vorteilhaften Ausgestaltung ist die Verbundscheibe eine Dachscheibe eines Kraftfahrzeugs, wobei die erste Scheibe die Innenscheibe ist und die zweite Scheibe die Außenscheibe ist.

Ferner kann die erste Scheibe und/oder die zweite Scheibe weitere geeignete Beschichtungen aufweisen, beispielsweise eine Antireflexionsbeschichtung, eine Antihaftbeschichtung, eine Antikratzbeschichtung, eine photokatalytische Beschichtung, eine Sonnenschutzbeschichtung und/oder Low-E-Beschichtung.

Weiterhin kann die Verglasungsanordnung optional weitere funktionelle Elemente, insbesondere elektronisch steuerbare optische Elemente umfassen, beispielsweise PDLC-Elemente, elektrochrome Elemente oder ähnliches, die typischerweise zwischen der ersten Scheibe und der zweiten Scheibe angeordnet sind.

Die erste Scheibe und die zweite Scheibe werden über die Zwischenschicht miteinander laminiert, beispielsweise durch Autoklavverfahren, Vakuumsackverfahren, Vakuumringverfahren, Kalanderverfahren, Vakuumlaminatoren oder Kombinationen davon. Die Verbindung der Scheibe erfolgt dabei üblicherweise unter Einwirkung von Hitze, Vakuum und/oder Druck.

In einem weiteren Aspekt umfasst die vorliegende Erfindung ein Fahrzeug, insbesondere Personenkraftwagen, mit einer erfindungsgemäßen Verglasungsanordnung.

In einem weiteren Aspekt umfasst die vorliegende Erfindung ein Verfahren zur Herstellung der erfindungsgemäßen Verglasungsanordnung, mindestens umfassend:
- Bereitstellen einer ersten Scheibe, einer zweiten Scheibe und einer thermoplastischen Zwischenschicht, welche eine lichtundurchlässige thermoplastische Zwischenschicht als Absorptionsmittel umfasst,
- Anordnen des Absorptionsmittels in einem Randbereich,
- Anordnen von mindestens einer Lichtquelle an der ersten Scheibe,
- Anordnen eines Lichtauskopplungsmittels an einer ersten Oberfläche (IV) der ersten Scheibe,
- Verbinden der ersten Scheibe und der zweiten Scheibe über die thermoplastische Zwischenschicht durch Lamination, sodass die zweite Oberfläche (III) der ersten Scheibe zur thermoplastischen Zwischenschicht weist.

Die lichundurchlässige thermoplastische Zwischenschicht wird bevorzugt durch eine opake thermoplastische Folie ausgebildet, wobei die thermoplastische Zwischenschicht die lichtundurchlässige thermoplastische Zwischenschicht und eine transparente thermoplastische Zwischenschicht enthält.

Die Anordnung der lichtundurchlässigen thermoplastischen Zwischenschicht kann manuell oder maschinell, beispielsweise mittels Roboters, erfolgen. Die lichtundurchlässige thermoplastische Zwischenschicht, insbesondere opake thermoplastische Folie, kann durch die einlaminierte transparente thermoplastische Zwischenschicht in Position gehalten werden.

Soll die Verbundscheibe eine Biegung aufweisen, wie insbesondere für Personenkraftwagen üblich, so werden die Scheiben vor dem Laminieren einem Biegeprozess unterzogen. Bevorzugt wird vor dem Laminieren und vor dem optionalen Biegen eine opake Abdeckschicht insbesondere auf den Randbereich der zweiten Scheibe aufgebracht. Die Abdeckschicht wird bei der Herstellung der Verbundscheibenanordnung im Siebdruck vor dem Biegen der einzelnen Scheiben aufgebracht. Dazu wird eine schwarze oder dunkele Emaille per Siebdruck aufgebracht und vor dem Laminieren, insbesondere vor dem Biegen oder während des Biegens, eingebrannt.

Weiterhin umfasst die vorliegende Erfindung die Verwendung der erfindungsgemäßen Verglasungsanordnung in Fortbewegungsmitteln für den Verkehr auf dem Lande, in der Luft oder zu Wasser, insbesondere in Kraftfahrzeugen beispielsweise als Dachscheibe, Heckscheibe und/oder Seitenscheibe.

Im Rahmen der vorliegenden Erfindung können alle Ausführungsformen, die für einzelne Merkmale genannt sind, auch frei miteinander kombiniert werden, sofern diese nicht widersprüchlich sind.

Im Folgenden wird die Erfindung anhand von Figuren und Ausführungsbeispielen näher erläutert. Die Figuren sind eine schematische Darstellung und nicht maßstabsgetreu. Die Figuren schränken die Erfindung in keiner Weise ein.

Es zeigen:
- Figur 1: eine Draufsicht auf eine Ausgestaltung einer erfindungsgemäßen Verbundscheibe am Beispiel einer Dachscheibe eines Fahrzeugs,
- Figur 2: eine schematische Querschnittdarstellung einer ersten Ausgestaltung der erfindungsgemäßen Verglasungsanordnung, und
- Figur 3: eine schematische Querschnittdarstellung einer zweiten Ausgestaltung der erfindungsgemäßen Verglasungsanordnung.

Angaben mit Zahlenwerten sind in aller Regel nicht als exakte Werte zu verstehen, sondern beinhalten auch eine Toleranz von +/- 1 % bis zu +/- 10 %.

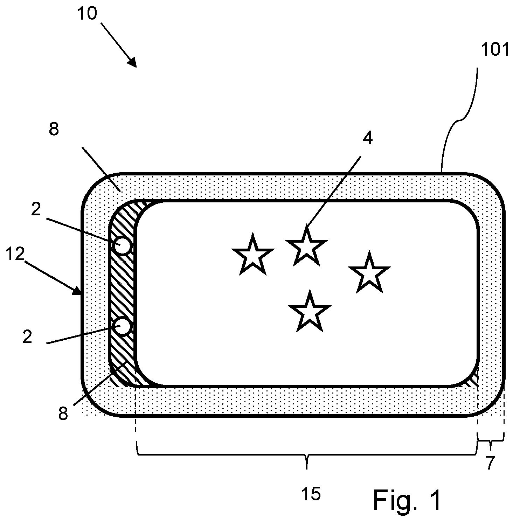

Figur 1 zeigt eine Draufsicht auf eine Ausgestaltung einer erfindungsgemäßen Verglasungsanordnung 10 mit einer Verbundscheibe 101 am Beispiel einer Dachscheibe für ein Fahrzeug. Alternativ kann die Verbundscheibe 101 eine Bauverglasung oder Bauteile eines Möbels oder elektrischen Geräts sein. Die Verglasungsanordnung 10 kann auch Teil einer Isolierverglasung sein und beispielsweise als Außen- oder Innenscheibe in einem Fenster eines Gebäudes dienen. Ferner ist die Verglasungsanordnung 10 in einem Innenraum einbaubar und kann beispielsweise als Verglasung eines Konferenzraums dienen.

Die Verglasungsanordnung 10 umfasst die Verbundscheibe 101 und zwei Lichtquellen 2. Die Lichtquellen 2 sind dazu vorgesehen, Licht im sichtbaren Bereich zu emittieren. Alternativ können sie infrarotes oder ultraviolettes Licht aussenden. Jede Lichtquelle 2 der Verglasungsanordnung 10 kann eine oder mehrere Leuchtdioden (LED, LED-Modul, LED-Leuchte) sein. Eine Lichtquelle 2 kann auch eine organische Leuchtdiode (OLED) umfassen.

Die Verbundscheibe 101 weist weiterhin vier Lichtauskopplungsmittel 4 auf. Ein Lichtauskopplungsmittel 4 koppelt Licht aus der Verbundscheibe 101 aus. Die Lichtauskopplungsmittel 4 sind an der ersten Oberfläche IV (Hauptoberfläche der Verbundscheibe 101) angeordnet. An der Stelle, an der ein Lichtauskopplungsmittels 4 angeordnet ist, kann das Licht über die Oberfläche IV aus der Verbundscheibe 101 austreten.

Das Lichtauskopplungsmittel 4 kann an jeder beliebigen Stelle der Oberfläche IV angeordnet sein. In Figur 1 umfasst das Lichtauskopplungsmittel 4 Strukturierungen der Oberfläche IV, an der die Totalreflexion innerhalb der Verbundscheibe 101 verhindert wird und Licht über die Oberfläche IV aus der Verbundscheibe 101 austreten kann. Alternativ kann das Lichtauskopplungsmittel 4 einen Aufdruck auf der Oberfläche IV oder in die Verbundscheibe 101 eingebrachte lichtstreuende, lichtbrechende, lichtbeugende oder lichtreflektierende Partikel oder Kavitäten umfassen.

Im vorliegenden Ausführungsbeispiel hier ist das Lichtauskopplungsmittel 4 auch als ein Aufdruck aus feinen lichtstreuenden Partikeln auf die Oberfläche IV ausgebildet. Durch diese wird die Totalreflexion eines Lichtstrahls an der Grenzfläche zwischen Verbundscheibe 101 und umgebender Luft unterbrochen und das Licht durch Streuung aus der Verbundscheibe 101 ausgekoppelt.

Die Verbundscheibe 101 weist im Randbereich 7 ein Absorptionsmittel 8 zur Absorption von in der Verbundscheibe 101 eingekoppeltem Licht 3 auf. Die Verbundscheibe 101 umfasst eine umlaufende Scheibenkante 12, wobei das Absorptionsmittel 8 sich umlaufend entlang der gesamten umlaufenden Scheibenkante 12 erstreckt. Alternativ kann das Absorptionsmittel 8 zumindest abschnittsweise entlang der umlaufenden Scheibenkante 12 angeordnet sein. Die Breite des Randbereichs 7 wird von der Scheibenkante 12 gemessen und beträgt beispielsweise 10 mm, 50 mm oder 100 mm.

Überraschend hat sich gezeigt, dass eine Anordnung von Absorptionsmittel 8 im Randbereich 7 der Verbundscheibe 101 besonders effektiv das Streulicht an der Scheibenkante 12 verhindert. Dies ist besonders vorteilhaft bei Scheiben, deren Kantenbereich im Einbauzustand nicht verdeckt sind. Dank des Absorptionsmittels 8 sind die freistehenden Kanten verdunkelt und somit die durch die Lichtauskopplungsmitte 4 ausgebildeten leuchtenden Muster (beispielsweise Sterne) gut erkennbar.

Die Verbundscheibe 101 weist einen Durchsichtbereich 15 auf, in dem die Verbundscheibe keine Abdeckschicht aufweist. Der Durchsichtbereich 15 der Verbundscheibe 101 macht beispielsweise mindestens 70% der Fläche der Verbundscheibe 101 aus.

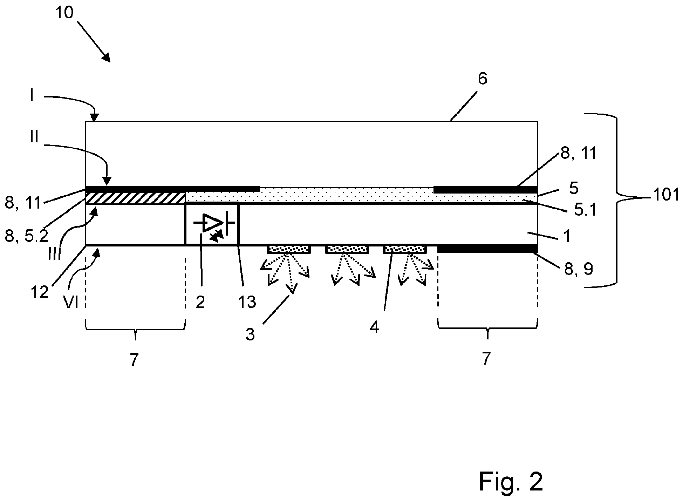

Figur 2 zeigt eine Querschnittsdarstellung der erfindungsgemäßen Verglasungsanordnung 10 aus Figur 1. Die Verbundscheibe 101 umfasst eine erste Scheibe 1, die über eine Zwischenschicht 5 mit einer zweiten Scheibe 6 verbunden ist. Die erste Scheibe 1, die Zwischenschicht 5 und die zweite Scheibe 6 wurden durch Lamination, insbesondere Autoklaven, miteinander verbunden. Die zweite Scheibe 6 weist eine erste Oberfläche I auf und eine zweite der ersten Oberfläche I gegenüberliegenden zweite Oberfläche II.

Die erste Scheibe 1 weist eine erste Oberfläche IV auf und eine zweite der ersten Oberfläche IV gegenüberliegenden zweite Oberfläche III. Die Stirnflächen der Verbundscheibe 101 sind orthogonal zu den Oberflächen III, IV angeordnet. Die erste Scheibe 1 und die zweite Scheibe 6 bestehen beispielsweise aus Kalk-Natronglas. Die thermoplastische Zwischenschicht 5 ist beispielsweise aus einer 0,76 mm dicken PVB-Folie gebildet. Die Dicke der ersten Scheibe 1 beträgt beispielsweise 1,6 mm und die Dicke der zweiten Scheibe 6 kann 2,1 mm betragen. Die erste Scheibe 1 und die zweite Scheibe 6 können beliebige Dicken ausweisen, beispielsweise auch gleich dick sein. Die Verbundscheibe 101 wird durch vier umlaufende Seitenflächen begrenzt.

Die erste Scheibe 1 kann vorgespanntes, teilvorgespanntes oder nicht-vorgespanntes Glas aufweisen. Alternativ kann die erste Scheibe 1 aus einem Kunststoff, beispielsweise aus Polycarbonat bestehen. Die erste Scheibe 1, die zweite Scheibe 6 und die Zwischenschicht 5 sind beispielsweise klar (weder getönt noch gefärbt). Alternativ oder zusätzlich kann die zweite Scheibe 6 dunkel getönt sein.

Die erste Scheibe 1 weist eine Aussparung 13 auf, in welche eine der zwei Lichtquellen 2 eingesetzt ist. Die Aussparung 13 erstreckt sich durchgehend von der ersten Oberfläche IV der ersten Scheibe 1 bis zur zweiten Oberfläche III der ersten Scheibe 1. Die Zwischenschicht 5 wurde im Bereich der Aussparung 13 nicht entfernt. Die Lichtquelle 2 befindet sich vollständig innerhalb der Verbundscheibe 101. Das von der Lichtquelle 2 emittierte Licht 3 ist in Richtung der Scheibe 1 gerichtet. Die Scheibe 1 ist dazu vorgesehen das eingekoppelte Licht 3 in Längsrichtung weiterzuleiten. Die erste Scheibe 1 stellt bevorzugt eine Innenscheibe und die zweite Scheibe 6 eine Außenscheibe dar. Die Innescheibe ist in Einbaulage einem Innenraum zugewandt. Die Außenscheibe ist in Einbaulage der äußeren Umgebung (z.B. eines Fahrzeugs) zugewandt. Diese Anordnung ist aufgrund der Position der Lichtquellen 2 in ersten Scheibe 1 besonders vorteilhaft, da die Lichtauskopplung in Richtung des (Fahrzeugs-) Innenraum stattfindet, was zu einer angenehmen Atmosphäre im Innenraum führt. Alternativ kann die zweite Scheibe 6 auch die Innenscheibe und die erste Scheibe 1 die Außenscheibe darstellen.

Die Zwischenschicht 5 umfasst eine transparente thermoplastische Zwischenschicht 5.1 und eine lichtundurchlässige thermoplastische Zwischenschicht 5.2. Die transparente thermoplastische Zwischenschicht 5.1 ist als eine erste thermoplastische Verbundfolie ausgebildet und die lichtundurchlässige thermoplastische Zwischenschicht 5.2 ist als eine zweite thermoplastische Folie ausgebildet. Die erste thermoplastische Verbundfolie ist transparent und die zweite thermoplastische Folie ist opak.

Die lichtundurchlässige thermoplastische Zwischenschicht 5.2 erstreckt sich ca. 10 mm, 50 mm oder 100 mm von der Scheibenkante 12 in Richtung Scheibenmitte der Verbundscheibe 101. Die lichtundurchlässige thermoplastische Zwischenschicht 5.2 ist entlang der Scheibenkante 12 angeordnet.

In der in Figur 2 gezeigten Ausführungsform umfasst das Absorptionsmittel 8 die lichtundurchlässige Zwischenschicht 5.2, sowie eine erste Abdeckschicht 9 und eine zweite Abdeckschicht 11. Die erste Abdeckschicht 9 ist auf der ersten Oberfläche IV der ersten Scheibe 1 aufgebracht. Die zweite Abdeckschicht 11 ist auf der Oberfläche II der zweiten Scheibe 6 aufgebracht. Da eine Lichtauskopplung an den Rändern der Verbundscheibe nicht gewünscht ist, weist der Randbereich 7 der ersten Scheibe 1 die lichtundurchlässige Zwischenschicht 5.2, die erste Abdeckschicht 9 und die zweite Abdeckschicht 11 auf, die das Streulicht absorbieren. Dadurch wird mit geringem Aufwand das Streulicht im Randbereich 7 der Verbundscheibe 101 verhindert.

Die zweite Abdeckschicht 11 ist an der zweiten Oberfläche II der zweiten Scheibe 6 angeordnet. Insbesondere überlappen sich die lichtundurchlässige thermoplastische Zwischenschicht 5.2 und die zweite Abdeckschicht 11 in Durchsichtrichtung der Verbundscheibe 101. Die Lichtquelle 2 wird in Durchsichtrichtung von der zweiten Abdeckschicht 11 überdeckt. Bei der zweiten Abdeckschicht 11 handelt es sich um einen peripheren, d.h. rahmenartigen Abdeckdruck. Die zweite Abdeckschicht 11 umrahmt den Dursichtbereich 15. Die erste Abdeckschicht 9 als auch die zweite Abdeckschicht 11 sind opak und vollflächig ausgebildet.

Der erste Abdeckschicht 9 und der zweite Abdeckschicht 11 enthalten Pigmente und Glasfritten. Sie können weitere chemische Verbindungen enthalten. Die Glasfritten können an- oder aufgeschmolzen und die Abdeckschicht 9 und 11 dadurch dauerhaft mit der Glasoberfläche verbunden (verschmolzen oder gesintert) werden. Das Pigment sorgt für die Opazität der Abdeckschicht 9, 11. Solche Abdeckschichten werden als Emaille aufgebracht.

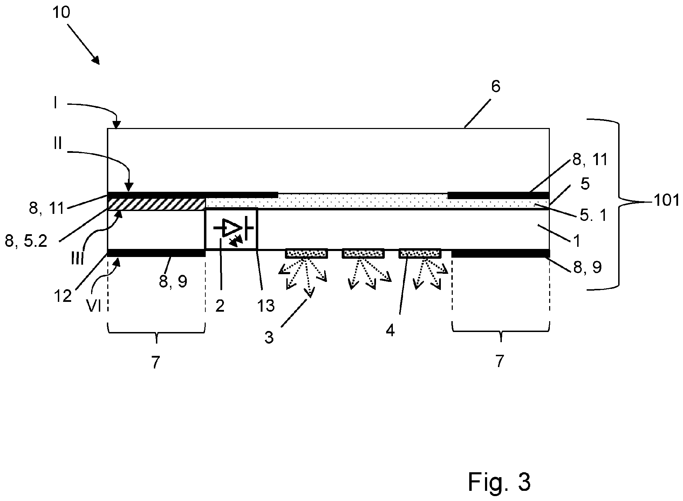

Figur 3 zeigt eine schematische Querschnittdarstellung einer zweiten Ausgestaltung der erfindungsgemäßen Verglasungsanordnung 10. Die in Figur 3 dargestellte Verglasungsanordnung 10 eignet sich besonders gut als Dachscheibe eines Kraftfahrzeugs.

Die Verglasungsanordnung 10 aus Figur 3 hat einen ähnlichen Aufbau wie die Verglasungsanordnung 10 aus Figur 2. Die zweite Scheibe 6 (Außenscheibe) gleicht der Scheibe 6 aus Figur 2. Im Unterschied zur Figur 2 ist jedoch die erste Abdeckschicht 9 in Figure 3 rahmenförmig auf der ersten Oberfläche IV der ersten Scheibe 1 aufgebracht.

Die erste Scheibe 1 ist beispielsweise dafür vorgesehen, in Einbaulage einem Innenraum eines Fahrzeugs zugewandt zu sein. Somit ist die erste Oberfläche IV der ersten Scheibe 1 vom Innenraum aus zugänglich, wogegen die erste Oberfläche I der zweiten Scheibe 6 bezüglich des Fahrzeuginnenraums nach außen weist.

### Bezugszeichenliste:

- 1: erste Scheibe
- 2: Lichtquelle
- 3: Licht
- 4: Lichtauskopplungsmittel
- 5: Zwischenschicht
- 5.1: transparente thermoplastische Zwischenschicht
- 5.2: opake thermoplastische Zwischenschicht
- 6: zweite Scheibe
- 7: Randbereich
- 8: Absorptionsmittel
- 9: erste Abdeckschicht
- 10: Verglasungsanordnung
- 11: zweite Abdeckschicht
- 12: Scheibenkante
- 13: Aussparung
- 15: Durchsichtbereich

- 101: Verbundscheibe

- I: erste Oberfläche der zweiten Scheibe 6
- II: zweite Oberfläche der zweiten Scheibe 6
- III: zweite Oberfläche der ersten Scheibe 1
- IV: erste Oberfläche der ersten Scheibe 1

## Patentansprüche

1. Verglasungsanordnung (10) mindestens umfassend:
• eine erste Scheibe (1) mit einer ersten Oberfläche (IV) und einer zweiten Oberfläche (III), wobei die erste Scheibe (1) dazu vorgesehen ist, eingekoppeltes Licht zumindest teilweise weiterzuleiten,
• eine Lichtquelle (2) zum Erzeugen von in die erste Scheibe (1) einkoppelbarem Licht (3),
• ein Lichtauskopplungsmittel (4) zum Auskoppeln von Licht aus der ersten Scheibe (1) über eine der zwei Oberflächen (III, IV),
• wobei die erste Scheibe (1) über eine Zwischenschicht (5) mit einer zweiten Scheibe (6) zu einer Verbundscheibe (101) verbunden ist,
• einen Randbereich (7), der sich von einer Scheibenkante (12) der ersten Scheibe (1) über mindestens 1 mm bis höchstens 500 mm auf einer der Oberflächen (III, IV) erstreckt, und
• ein Absorptionsmittel (8) zur Absorption von in der ersten Scheibe (1) eingekoppeltem Licht (3), das in dem Randbereich (7) angeordnet ist,
wobei das Absorptionsmittel (8) eine lichtundurchlässige thermoplastische Zwischenschicht (5.2) umfasst.

2. Verglasungsanordnung nach Anspruch 1, wobei die lichtundurchlässige thermoplastische Zwischenschicht (5.2) schwarz gefärbt ist.

3. Verglasungsanordnung nach Anspruch 1 oder 2, wobei die Zwischenschicht (5) eine transparente thermoplastische Zwischenschicht (5.1) und die lichtundurchlässige thermoplastische Zwischenschicht (5.2) umfasst.

4. Verglasungsanordnung nach Anspruch 3, wobei die transparente thermoplastische Zwischenschicht (5.1) durch eine erste thermoplastische Verbundfolie ausgebildet ist und die lichtundurchlässige thermoplastische Zwischenschicht (5.2) durch eine zweite thermoplastische Verbundfolie ausgebildet ist, wobei die erste thermoplastische Verbundfolie transparent ist und die zweite thermoplastische Verbundfolie opak ist.

5. Verglasungsanordnung nach Anspruch 4, wobei sich die erste thermoplastische Verbundfolie über die gesamte Fläche der Verbundscheibe (101) erstreckt mit Ausnahme des Randbereichs (7) und die zweite thermoplastische Verbundfolie erstreckt sich mindestens, vorzugsweise ausschließlich, über den Randbereich (7) der Verbundscheibe (101).

6. Verglasungsanordnung nach einem der Ansprüche 1 bis 5, wobei sich die opake thermoplastische Zwischenschicht von der Scheibenkante (12) bis zu einer Aussparung (13) erstreckt, in welcher die Lichtquelle (2) angeordnet ist.

7. Verglasungsanordnung nach einem der Ansprüche 1 bis 6, wobei sich die lichtundurchlässige thermoplastische Zwischenschicht (5.2) und die Lichtquelle (2) in Durchsichtrichtung durch die Verbundscheibe (101) nicht überlappen.

8. Verglasungsanordnung nach einem der Ansprüche 1 bis 7, wobei das Absorptionsmittel (8) eine erste Abdeckschicht (9) umfasst, die an der ersten Oberfläche (IV) der ersten Scheibe (1) angeordnet ist.

9. Verglasungsanordnung nach einem der Ansprüche 1 bis 8, wobei die zweite Scheibe (9) eine zweite Abdeckschicht (11) aufweist.

10. Verglasungsanordnung nach einem der Ansprüche 8 oder 9, wobei die erste Abdeckschicht (9) und/oder die zweite Abdeckschicht (11) opak sind/ist.

11. Verglasungsanordnung nach einem der Ansprüche 8 bis 10, wobei die erste Abdeckschicht (9) sich von einer Scheibenkante (12) der ersten Scheibe (1) über 1 mm bis 500 mm, bevorzugt 10 mm bis 150 mm, besonders bevorzugt 10 mm bis 15 mm erstreckt.

12. Verglasungsanordnung nach einem der Ansprüche 1 bis 11, wobei das Absorptionsmittel (8) zumindest abschnittsweise entlang der umlaufenden Scheibenkante (12) der Verbundscheibe (101) angeordnet ist oder das Absorptionsmittel (8) sich umlaufend entlang der gesamten umlaufenden Scheibenkante (12) erstrecken.

13. Verglasungsanordnung nach einem der vorhergehenden Ansprüchen 8 bis 12, wobei die erste Abdeckschicht (9) und/oder die zweite Abdeckschicht (11) eine opake Emaille ist, bevorzugt aufgebracht als Siebdruck oder als Digitaldruck.

14. Verglasungsanordnung nach einem der Ansprüche 9 bis 13, wobei sich die lichtundurchlässige thermoplastische Zwischenschicht (5.2) die erste Abdeckschicht (9) und die zweite Abdeckschicht (11) zumindest teilweise in Durchsichtrichtung der Verbundscheibe (101) überlappen.

15. Verglasungsanordnung nach einem der vorhergehenden Ansprüche, wobei die Verbundscheibe (101) eine Dachscheibe eines Kraftfahrzeugs ist und die erste Scheibe (1) die Innenscheibe ist und die zweite Scheibe (6) die Außenscheibe ist.

16. Fahrzeug, insbesondere Personenkraftwagen, mit einer Verglasungsanordnung nach einem der vorhergehenden Ansprüche.

## Claims

1. A glazing assembly (10) at least comprising:
• a first pane (1) having a first surface (IV) and a second surface (III), wherein the first pane (1) is provided for transmitting coupled-in light at least in part,
• a light source (2) for generating light (3) that can be coupled into the first pane (1),
• a light outcoupling means (4) for outcoupling light from the first pane (1) via one of the two surfaces (III, IV),
• wherein the first pane (1) is joined to a second pane (6) via an intermediate layer (5) to form a laminated pane (101),
• an edge region (7) which extends from a pane edge (12) of the first pane (1) over at least 1 mm up to at most 500 mm on one of the surfaces (III, IV), and
• an absorption means (8) for absorbing light (3) coupled into the first pane (1) and arranged in the edge region (7),
wherein the absorption means (8) comprises a light-impermeable thermoplastic intermediate layer (5.2).

2. The glazing assembly according to claim 1, wherein the light-impermeable thermoplastic intermediate layer (5.2) is colored black.

3. The glazing assembly according to claim 1 or 2, wherein the intermediate layer (5) comprises a transparent thermoplastic intermediate layer (5.1) and the light-impermeable thermoplastic intermediate layer (5.2).

4. The glazing assembly according to claim 3, wherein the transparent thermoplastic intermediate layer (5.1) is formed by a first thermoplastic laminated film, and the light-impermeable thermoplastic intermediate layer (5.2) is formed by a second thermoplastic laminated film, wherein the first thermoplastic laminated film is transparent, and the second thermoplastic laminated film is opaque.

5. The glazing assembly according to claim 4, wherein the first thermoplastic laminated film extends over the entire surface of the laminated pane (101) with the exception of the edge region (7), and the second thermoplastic laminated film extends at least, preferably exclusively, over the edge region (7) of the laminated pane (101).

6. The glazing assembly according to any of claims 1 to 5, wherein the opaque thermoplastic intermediate layer extends from the pane edge (12) to a recess (13) in which the light source (2) is arranged.

7. The glazing assembly according to any of claims 1 to 6, wherein the light-impermeable thermoplastic intermediate layer (5.2) and the light source (2) do not overlap in the viewing direction through the laminated pane (101).

8. The glazing assembly according to any of claims 1 to 7, wherein the absorption means (8) comprises a first cover layer (9) which is arranged on the first surface (IV) of the first pane (1).

9. The glazing assembly according to any of claims 1 to 8, wherein the second pane (9) has a second cover layer (11).

10. The glazing assembly according to one of claims 8 or 9, wherein the first cover layer (9) and/or the second cover layer (11) are/is opaque.

11. The glazing assembly according to any of claims 8 to 10, wherein the first cover layer (9) extends from a pane edge (12) of the first pane (1) over 1 mm up to 500 mm, preferably 10 mm to 150 mm, particularly preferably 10 mm to 15 mm.

12. The glazing assembly according to any of claims 1 to 11, wherein the absorption means (8) is arranged at least in portions along the peripheral pane edge (12) of the laminated pane (101), or the absorption means (8) extends peripherally along the entire peripheral pane edge (12).

13. The glazing assembly according to any of the preceding claims 8 to 12, wherein the first cover layer (9) and/or the second cover layer (11) is an opaque enamel, preferably applied as a screen print or as a digital print.

14. The glazing assembly according to any of claims 9 to 13, wherein the light-impermeable thermoplastic intermediate layer (5.2) overlaps the first cover layer (9) and the second cover layer (11) at least in part in the viewing direction of the laminated pane (101).

15. The glazing assembly according to any of the preceding claims, wherein the laminated pane (101) is a roof pane of a motor vehicle, and the first pane (1) is the inner pane, and the second pane (6) is the outer pane.

16. A vehicle, in particular a passenger car, having a glazing assembly according to any of the preceding claims.

## Revendications

1. Système formant vitrage (10) comprenant au moins :
• une première vitre (1) comportant une première surface (IV) et une seconde surface (III), dans lequel la première vitre (1) est prévue pour transmettre au moins partiellement la lumière introduite,
• une source de lumière (2) permettant de générer de la lumière (3) pouvant être introduite dans la première vitre (1),
• un moyen d'extraction de lumière (4) permettant d'extraire la lumière de la première vitre (1) par l'intermédiaire de l'une des deux surfaces (III, IV),
• dans lequel la première vitre (1) est reliée à une seconde vitre (6) par l'intermédiaire d'une couche intermédiaire (5) pour former un vitrage feuilleté (101),
• une zone marginale (7) qui s'étend depuis un bord de vitre (12) de la première vitre (1) sur au moins 1 mm et au plus 500 mm sur l'une des surfaces (III, IV), et
• un moyen d'absorption (8) permettant d'absorber la lumière (3) introduite dans la première vitre (1), lequel est disposé dans la zone marginale (7),
dans lequel le moyen d'absorption (8) comprend une couche intermédiaire thermoplastique opaque (5.2).

2. Système formant vitrage selon la revendication 1, dans lequel la couche intermédiaire thermoplastique opaque (5.2) est colorée en noir.

3. Système formant vitrage selon la revendication 1 ou 2, dans lequel la couche intermédiaire (5) comprend une couche intermédiaire thermoplastique transparente (5.1) et la couche intermédiaire thermoplastique opaque (5.2).

4. Système formant vitrage selon la revendication 3, dans lequel la couche intermédiaire thermoplastique transparente (5.1) est réalisée par un premier film composite thermoplastique et la couche intermédiaire thermoplastique opaque (5.2) est réalisée par un second film composite thermoplastique, dans lequel le premier film composite thermoplastique est transparent et le second film composite thermoplastique est opaque.

5. Système formant vitrage selon la revendication 4, dans lequel le premier film composite thermoplastique s'étend sur toute la surface du vitrage feuilleté (101) à l'exception de la zone marginale (7) et le second film composite thermoplastique s'étend au moins, de préférence exclusivement, sur la zone marginale (7) du vitrage feuilleté (101).

6. Système formant vitrage selon l'une des revendications 1 à 5, dans lequel la couche intermédiaire thermoplastique opaque s'étend depuis le bord de vitre (12) jusqu'à un évidement (13) dans lequel est disposée la source de lumière (2).

7. Système formant vitrage selon l'une des revendications 1 à 6, dans lequel la couche intermédiaire thermoplastique opaque (5.2) et la source de lumière (2) ne se chevauchent pas dans la direction de transparence à travers le vitrage feuilleté (101).

8. Système formant vitrage selon l'une des revendications 1 à 7, dans lequel le moyen d'absorption (8) comprend une première couche de recouvrement (9) qui est disposée sur la première surface (IV) de la première vitre (1).

9. Système formant vitrage selon l'une des revendications 1 à 8, dans lequel la seconde vitre (9) présente une seconde couche de recouvrement (11).

10. Système formant vitrage selon l'une des revendications 8 ou 9, dans lequel la première couche de recouvrement (9) et/ou la seconde couche de recouvrement (11) sont opaques.

11. Système formant vitrage selon l'une des revendications 8 à 10, dans lequel la première couche de recouvrement (9) s'étend depuis un bord de vitre (12) de la première vitre (1) sur 1 mm à 500 mm, de préférence sur 10 mm à 150 mm, de manière particulièrement préférée sur 10 mm à 15 mm.

12. Système formant vitrage selon l'une des revendications 1 à 11, dans lequel le moyen d'absorption (8) est disposé au moins dans certaines sections le long du bord de vitre (12) circonférentiel du vitrage feuilleté (101) ou le moyen d'absorption (8) s'étend de manière circonférentielle le long de l'ensemble du bord de vitre (12) circonférentiel.

13. Système formant vitrage selon l'une des revendications précédentes 8 à 12, dans lequel la première couche de recouvrement (9) et/ou la seconde couche de recouvrement (11) sont un émail opaque, de préférence appliqué sous forme de sérigraphie ou d'impression numérique.

14. Système formant vitrage selon l'une des revendications 9 à 13, dans lequel la couche intermédiaire thermoplastique opaque (5.2) chevauche au moins partiellement la première couche de recouvrement (9) et la seconde couche de recouvrement (11) dans la direction de transparence du vitrage feuilleté (101).

15. Système formant vitrage selon l'une des revendications précédentes, dans lequel le vitrage feuilleté (101) est une vitre de toit d'un véhicule automobile et la première vitre (1) est la vitre interne et la seconde vitre (6) est la vitre externe.

16. Véhicule, en particulier voiture de tourisme, comportant un système formant vitrage selon l'une des revendications précédentes.
